(19)

Europäisches
Patentamt
European
Patent Office
Office européen
des brevets

(11) **EP 1 447 957 B1**

(12) **EUROPÄISCHE PATENTSCHRIFT**

(45) Veröffentlichungstag und Bekanntmachung des Hinweises auf die Patenterteilung:
**02.06.2010 Patentblatt 2010/22**

(51) Int Cl.:
*H04L 29/06* (2006.01)     *H04L 12/26* (2006.01)

(21) Anmeldenummer: **04011450.6**

(22) Anmeldetag: **12.05.2000**

(54) **Verfahren zum Erlernen der Kontextregeln zu Nachrichtenattributen**

Method for identifying the context rules of data message attributes

Procédé pour identifier des règles de contexte d'attributs de messages de données

(84) Benannte Vertragsstaaten:
**DE FR GB IT**

(30) Priorität: **25.06.1999 DE 19929166**

(43) Veröffentlichungstag der Anmeldung:
**18.08.2004 Patentblatt 2004/34**

(62) Dokumentnummer(n) der früheren Anmeldung(en) nach Art. 76 EPÜ:
**00110067.6 / 1 063 828**

(73) Patentinhaber: **Tektronix Berlin GmbH & Co. KG**
**13629 Berlin (DE)**

(72) Erfinder: **Musial, Marek, Dr.**
**10551 Berlin (DE)**

(74) Vertreter: **Schurack, Eduard F. et al**
**Hofstetter, Schurack & Skora**
**Balanstrasse 57**
**81541 München (DE)**

(56) Entgegenhaltungen:
**WO-A-98/11702     US-A- 5 519 647**

- **"Useful Equations for Linear Regression" INTERNET, [Online] 26. Januar 1999 (1999-01-26), Seiten 1-3, XP002206531 Gefunden im Internet: URL:http://hesweb1.med.virginia.edu/biosta t/ teaching/biostat.mod/formulas.pdf> [gefunden am 2002-07-17]**

## Beschreibung

Die vorliegende Erfindung betrifft ein Verfahren zum maschinellen Erlernen arithmetischer Klassifikationsregeln für Merkmalsvektoren aus einer Trainingsmenge mit positiven Beispielen.

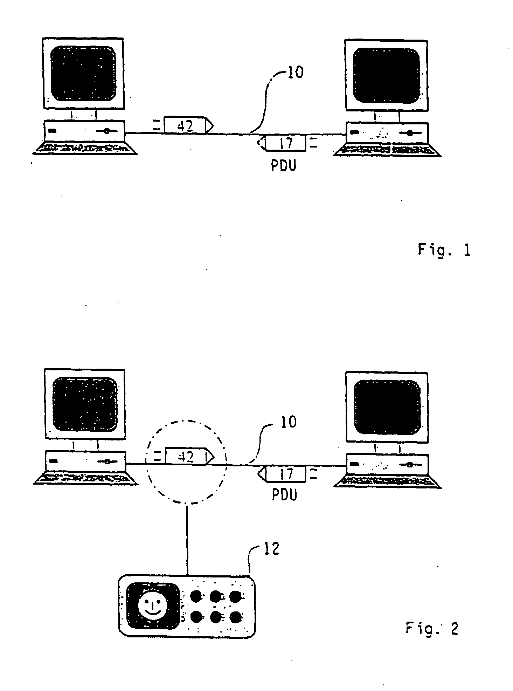

Es ist bekannt, daß Kommunikationspartner gemäß einem Kommunikationsprotokoll untereinander einen Datenaustausch vornehmen. Eine Anordnung zur Durchführung eines Datenaustausches auf diese Weise ist in Fig. 1 dargestellt. Kommunikationspartner A und B kommunizieren miteinander über ein Kommunikationsmedium 10, z.B. eine elektrische Leitung, indem sie gemäß einem Kommunikationsprotokoll Nachrichten oder Protokolldateneinheiten (Protocol Data Units, PDUs) austauschen. Das Kommunikationsprotokoll stellt ein vollständiges Regelwerk für das geforderte Verhalten jedes Kommunikationspartners A und B dar. Die Kommunikationspartner A und B sind Instanzen im Sinne des OSI-Referenzmodells, das im einzelnen in "ISO. Information Processing Systems - Open Systems Interconnection - Basis Reference Model" International Standard ISO/IS 7498, ISO, 1984 beschrieben ist. Das geeignete und übliche Konzept zur Definition von Kommunikationsprotokollen ist der erweiterte endliche Automat (Extended Finite State Machine, EFSM) wie er z.B. im Buch von D. Hogrefe (Estelle, LOTOS und SDL: "Standard-Spezifikationssprachen für verteilte Systeme", Springer Compass. Springer Verlag - Berlin, Heidelberg, New York etc. 1989) beschrieben ist. Er stellt eine Verallgemeinerung des z.B. "Proceedings of the 1994 International Symposium on Software Testing and Analysis" (ISSTA), ACM SIGSOFT Software Engineering Notes, Special issue, Seiten 109 bis 124, August 1994 erklärten endlichen Automaten (Finite State Machine, FSM) dar.

Voraussetzung für das einwandfreie Funktionieren digitaler Kommunikation ist, daß sich alle beteiligten Kommunikationspartner gemäß gemeinsamer Regeln, den sogenannten Protokollen, verhalten. Aufgrund der Offenheit, Diversität, Komplexität und Bandbreite moderner Kommunikationssysteme kommt der Entwicklung, Normung und Beschreibung von Protokollen eine ständig größere Bedeutung zu. Im selben Maße vermehren sich die Fehlerquellen, die zu mehr oder weniger großen Störungen in Kommunikationssystemen führen. Zu typischen Fehlerquellen, die sich in modernen Breitbandkommunikationssystemen immer wieder zeigen, gehören:

- Fehlfunktionen aufgrund des Einsatzes von Protokollen oder Protokollvarianten, die im gegebenen Kontext einer Systeminstallation nicht benützt werden dürften;
- Fehlfunktionen aufgrund von konfigurierbaren Protokollparametern, die für den gegebenen Kontext einer Systeminstallation inkompatibel eingestellt wurden;
- Fehlfunktionen aufgrund von Überlastsituationen, in denen einzelne Komponenten des Kommunikationssystems gezwungen sind, Daten zu verwerfen.

Die Erfahrung zeigt, daß alle Bemühungen die einwandfreie Funktion kommunikationsrelevanter Hard- und Software vor der Markteinführung durch geeignete Entwicklungsverfahren und aktive Testprozeduren sicherzustellen, nicht in jedem Fall Erfolg haben. Daraus entsteht der Bedarf nach Hilfsmitteln zur Fehlersuche, die im laufenden Betrieb eines Telekommunikationssystems eingesetzt werden und Fehlfunktionen erkennen, einer Systemkomponente zuordnen und Anhaltspunkte zu ihrer Beseitigung liefern können.

Verfügbare Werkzeuge für Messungen im laufenden Betrieb, meist als Protokolltester bezeichnet, haben gemeinsam, daß sie nicht das vollständige Kommunikationsverhalten gegen das Soll-Verhalten validieren können, sondern ein erhebliches Maß an manueller Prüfarbeit erfordern. Hier besteht also ein erhebliches Potential, eine sehr unangenehme manuelle Suchtätigkeit zu automatisieren.

In diesem Zusammenhang sei auf die WO 98/11702 A1 verwiesen, die eine Vorrichtung und ein Verfahren zum Empfangen, Analysieren und Sichten von Live-Netzwerkdaten offenbart. Diese Vorrichtung empfängt und analysiert Pakete und präsentiert die gewonnenen Ergebnisse dem Benutzer live. Dieses Verfahren kann dazu verwendet werden, Protokolle auf verschiedenen Schichten der Netzwerkarchitektur zu analysieren.

Daneben sei noch auf "Useful Equations for Linear Regression" aus dem Internet, 26. Januar 1999, Seiten 1 bis 3, http://hesweb1.med.virginia.edu/biostat/teaching/biostat.mod/ for mulas.pdf, verwiesen, wo Gleichungen für lineare Regression angegeben sind.

Der vorliegenden Erfindung liegt daher die Aufgabe zugrunde, ein Verfahren bereitzustellen, mit dem das Soll-Verhalten, das als Grundlage der Überprüfung einer Kommunikation dient, möglichst schnell und kostengünstig einem Analysegerät zur Verfügung gestellt werden kann. Insbesondere soll dies auch möglich sein, wenn das zugrundeliegende Protokoll nicht in Form einer formalen, maschinentauglichen Spezifikation vorliegt.

Diese Aufgabe wird gelöst durch ein Verfahren mit den Merkmalen des unabhängigen Anspruchs 1.

Die Entwicklung eines Prüfalgorithmus für ein konkretes Kommunikationsprotokoll kann selbst bei Vorliegen einer maschinenverständlichen Protokollspezifikation im allgemeinen nicht völlig automatisch erfolgen, sondern erfordert ein gewisses Maß an menschlicher Entwurfsarbeit. Die erfindungsgemäße Lösung bietet den Vorteil, daß, beispielsweise wenn nicht genügend Ressourcen zur Verfügung stehen, durch die Verwendung eines maschinellen Lernverfahrens nahezu ohne menschliche Entwurfsarbeit Prüfalgorithmen entwickelt werden können. Im Hinblick darauf, daß eine sehr große Zahl von Protokollen und Protokollvarianten existiert, so daß sich nicht für jede einzelne davon ein signifikanter Entwicklungsaufwand für eine Prüfmaschine lohnt, ist dies besonders vorteilhaft.

In der immer schnelleren Weiterentwicklung von Kommunikationssystemen und -standards beobachtet man häufig ein Nebeneinander von international standardisierten Protokollen und proprietären Entwicklungen, welche einen vorhandenen Bedarf möglichst schnell, d.h. vor der Konkurrenz und erst recht vor Abschluß eines meist langwierigen Standardisierungsprozesses, erfüllen sollen. Für derartige proprietäre Protokollvarianten sind formale Spezifikationen häufig nicht oder nur zu einem hohen Preis vom Hersteller zu beschaffen. Mit der vorliegenden Erfindung kann auch ohne formale Spezifikation das Soll-Verhalten ermittelt und für die Analyse zur Verfügung gestellt werden.

Um Angaben zu den Nachrichtenattributen zu erhalten, d.h. Kontextregeln über Nachrichtenattribute zu erlernen, wird erfindungsgemäß ein Verfahren zum maschinellen Erlernen arithmetischer Klassifikationsregeln für Merkmalsvektoren aus einer Trainingsmenge mit positiven Beispielen vorgeschlagen, bei dem zunächst anhand statistischer Maße aus vorhandenen Attributen abgeleitete Attribute in Form arithmetischer Terme gebildet werden und anschließend logische Bedingungen auf den Zahlenwerten der Attribute aus der Trainingsmenge und der abgeleiteten Attribute formuliert werden. Dabei handelt es sich bei der Trainingsmenge um eine aus PDUs zusammengesetzte Beispielkommunikation einer Protokollmaschine, wobei PDUs aus PDU-Typen einerseits und PDU-Attributen andererseits aufgebaut sind. Ein Merkmalsvektor wird gebildet aus einer Zusammensetzung von PDU-Attributen von einer bestimmten Anzahl von PDUs, wobei jede Komponente eines Merkmalsvektors als Ausprägung eines Attributs aufgefasst wird, und die logischen Bedingungen sind die Regeln für die numerischen Attributwerte einer Sequenz von PDUs. Positive Beispiele sind hierbei Beispiele fehlerfreier Kommunikation im Gegensatz zu Beispielen, in denen Verstöße gegen Protokollregeln aufgetreten sind (negative Beispiele).

Besonders bevorzugt ist die Bildung der abgeleiteten Attribute anhand von Korrelations- und Regressionskoeffizienten auf der Trainingsmenge für jedes mögliche Attributpaar, wobei der Wert eines abgeleiteten Attributs für jedes Trainingsbeispiel berechnet wird als Summe, Produkt, Quotient oder Differenz zweier schon vorhandener Attribute oder als Produkt aus einem vorhandenen Attribut und einer Konstanten.

Bei der Formulierung der Bedingungen können auffällige Häufungen der Werte eines in der Trainingsmenge vorhandenen oder abgeleiteten Attributs bei einem Zahlenwert oder innerhalb eines Zahlenintervalls berücksichtigt werden, wobei eine auffällige Häufung innerhalb eines Zahlenintervalls bevorzugt dadurch definiert ist, daß das Zahlenintervall von allen möglichen Zahlenintervallen dasjenige Zahlenintervall ist, bei dem der Quotient zwischen der Breite der kleineren der beiden unmittelbar an das Zahlenintervall angrenzenden Lücken, in denen keine Werte des betreffenden Merkmals auftreten, und der Breite der größten Lücke innerhalb des Zahlenintervalls, in der keine Werte des betreffenden Merkmals auftreten, maximal ist.

Mehrere Unterklassen der Trainingsmenge können konstruiert werden durch Organisation der logischen Bedingungen in einer Disjunktion von Klauseln, wobei eine Klausel eine Konjunktion einer oder mehrerer logischer Bedingungen darstellt und jeweils eine Unterklasse der Trainingsmenge beschreibt.

Zur Charakterisierung der gesamten Trainingsmenge kann eine Auswahl der konstruierten Klauseln durchgeführt werden, so daß möglichst alle Elemente der Trainingsmenge durch mindestens eine der Klauseln ausgewählt werden und möglichst viele durch genau eine Klausel.

Weitere vorteilhafte Ausführungsformen ergeben sich aus den Unteransprüchen.

Ein Ausführungsbeispiel wird im folgenden unter Hinweis auf die beigefügten Zeichnungen näher beschrieben:

Es stellen dar:

Fig. 1     ein Blockschaltbild einer Anordnung aus dem Stand der Technik;
Fig. 2     ein Blockschaltbild einer Anordnung zur Durchführung des erfindungsgemäßen Verfahrens;
Fig. 3     den logischen Kontext der Spuranalyse;
Fig. 4     die Zusammensetzung einer PDU aus PDU-Typ und Nach- richtenattributen;
Fig. 5     eine Beispielkommunikation, beschränkt auf die PDU- Typen, mit dazwischen definierten Zeitpunkten;
Fig. 6     die für fünf Zeitpunkte der Beispielkommunikation von Fig. 5 aufgestellte Ähnlichkeitsmatrix;
Fig. 7     der sich aus der Ähnlichkeitsmatrix von Fig. 6 erge- bende endliche Automat;
Fig. 8     der sich aus der kompletten Beispielkommunikation von Fig. 5 ergebende endliche Automat;
Fig. 9     den minimalen Automaten, der sich bei maximaler Schwelle aus der Beispielkommunikation von Fig. 5 er- gibt;
Fig. 10    den maximalen Automaten, der sich bei minimaler Schwelle aus der Beispielkommunikation von Fig. 5 er- gibt;
Fig. 11    eine Darstellung zur Erläuterung der Vorgehensweise zum Erlernen der Nachrichtenattribute;
Fig. 12    eine Tabelle mit Merkmalen der Beispielkommunikation von Fig. 11 sowie daraus abgeleiteten Merkmalen; und
Fig. 13    eine Darstellung zur Formulierung von Bedingungen aufgrund auffälliger Häufungen des Zahlenwerts für ein bestimmtes Merkmal.

Wie Fig. 2, in der mit Fig. 1 übereinstimmende Teile mit den gleichen Bezugszeichen versehen sind, erkennen läßt, ist mit dem Kommunikationsmedium 10 ein Spuranalysator 12 so gekoppelt, daß er die über das Kommunikationsmedium 10 zwischen den Kommunikationspartnern A und B ausgetauschten Daten erfassen kann. Dabei liest der Spuranalysator 12 alle ausgetauschten Nachrichten mit, ohne sie zu verändern oder in sonstiger Weise auf die Kommunikation zwischen A und B Einfluß zu nehmen. Der Spuranalysator kennt zwar die verschiedenen Nachrichtentypen der Kommunikation, d.h. die Protokollsyntax, nicht jedoch den Protokollaufbau, d.h. wie die Nachrichten aufgebaut sind und wie die Nachrichtentypen von den beteiligten Kommunikationspartnern verwendet werden, um Kommunikationen durchzuführen. Der Spuranalysator 12 kennt keine Referenzprotokolle.

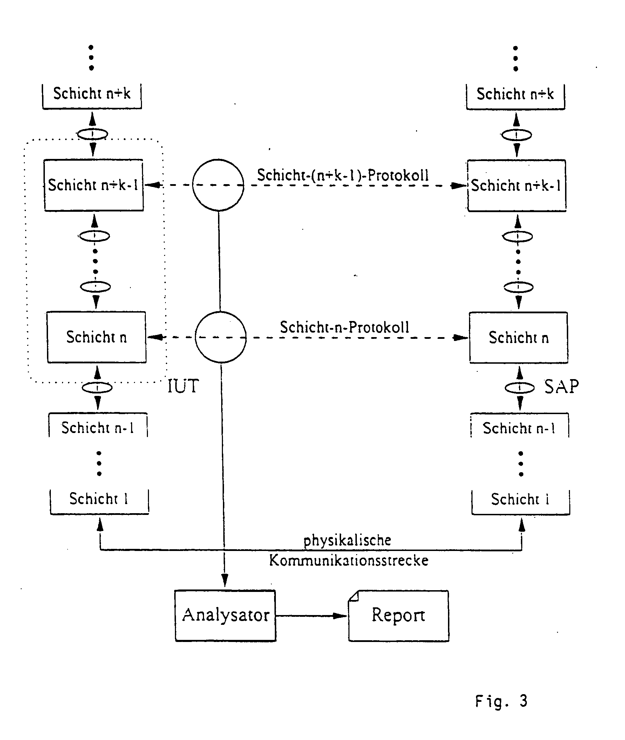

Fig. 3 zeigt die logische Einbindung des Analysealgorithmus in den Kommunikationsprozeß. Der Analysealgorithmus liest die PDUs einer Schicht n, $n \geq 1$ aus dem Protokollstapel und leitet aus dieser Beobachtung, wie nachfolgend ausgeführt, Regeln ab, die das korrekte Protokollverhalten beschreiben. Voraussetzung hierfür ist, daß sich alle Kommunikationsteilnehmer und die für den Transport der Schicht-n-PDUs verantwortlichen tieferen Protokollschichten protokollkonform verhalten. Der Spuranalysator erhält hierbei jedoch keinerlei Information über die an den Dienstzugangspunkten ausgetauschten Primitiven.

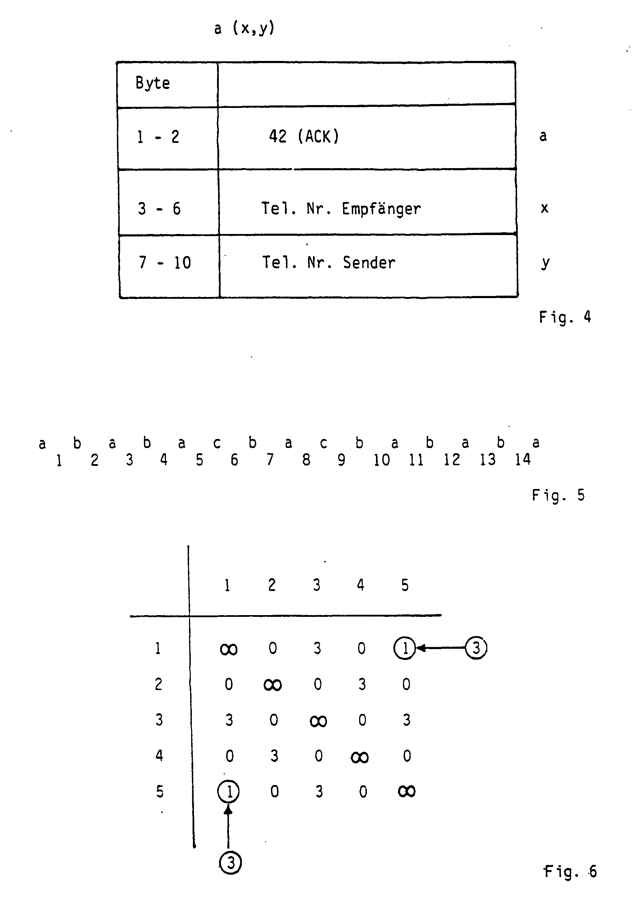

Fig. 4 zeigt beispielhaft den Aufbau einer PDU a(x, y). Hierbei bezeichnet a den Nachrichtentyp, während x und y Nachrichtenattribute, d.h. Daten betreffen. In dem dargestellten Beispiel wird mit dem ersten und zweiten Byte die Zahl 42 spezifiziert, was darauf hinweist, daß a vom Typ ACK ist. x bezeichnet mit dem dritten bis sechsten Byte die Telefonnummer des Empfängers, während y mit dem siebten bis zehnten Byte die Telefonnummer des Senders bezeichnet.

Fig. 5 zeigt eine beispielhafte Kommunikation zwischen der Instanz A und der Instanz B von Fig. 2. In einem ersten Schritt, der nicht Gegenstand der Erfindung ist, sind zunächst nur die Nachrichtentypen von Interesse, wohingegen die Nachrichtenattribute momentan nicht betrachtet werden. Zwischen den Nachrichtentypen werden Zeitpunkte definiert, hier die Zeitpunkte 1 bis 14. Eine Ähnlichkeitsmatrix, siehe Fig. 6, wird nunmehr so erstellt, daß oben und links die Zeitpunkte der Beispielkommunikation aufgetragen werden. Zwischen jeweils zwei Zeitpunkten innerhalb der Beispielkommunikation wird der Wert in die Äquivalenzmatrix eingetragen, der der Länge der für beide Zeitpunkte übereinstimmenden, die Zeitpunkte umgebenden PDU-Typen-Sequenz entspricht.

Der Übersichtlichkeit halber ist in Fig. 6 die Ähnlichkeitsmatrix nicht für alle 14 Zeitpunkte, sondern lediglich für die ersten fünf Zeitpunkte angegeben. Da die jeweiligen Zeitpunkte mit sich selbst unmittelbar in allen vorausgehenden und allen nachfolgende Zeitpunkten übereinstimmen, ist die Diagonale mit "unendlich" gefüllt. Da die Ähnlichkeitsmatrix symmetrisch zur Diagonale ist, wird im folgenden nurmehr die rechte obere Hälfte näher betrachtet.

Betrachtet wird zunächst der Eintrag an der Position erste Reihe, zweite Spalte: Der Vorläufer von Zustand 1 ist ein a, während der Vorläufer von Zustand 2 ein b ist. Der Nachfolger des Zustands 1 ist ein b, während der Nachfolger des Zustands 2 ein a ist. Der in die Matrix einzutragende Wert ist daher 0.

Der Wert in der ersten Reihe, dritte Spalte ergibt sich wie folgt: Der Vorgänger des Zeitpunkts 1 ist ein a ebenso wie der Vorgänger des Zeitpunkts 3. Dem Zeitpunkt 1 folgt ebenso wie dem Zeitpunkt 3 die Folge b a. Damit ist der in die Matrix einzutragende Wert 3. In entsprechender Weise ergeben sich die übrigen Werte der Ähnlichkeitsmatrix.

Es gibt nun verschiedene Möglichkeiten, aus der Ähnlichkeitsmatrix Äquivalenzklassen abzuleiten:

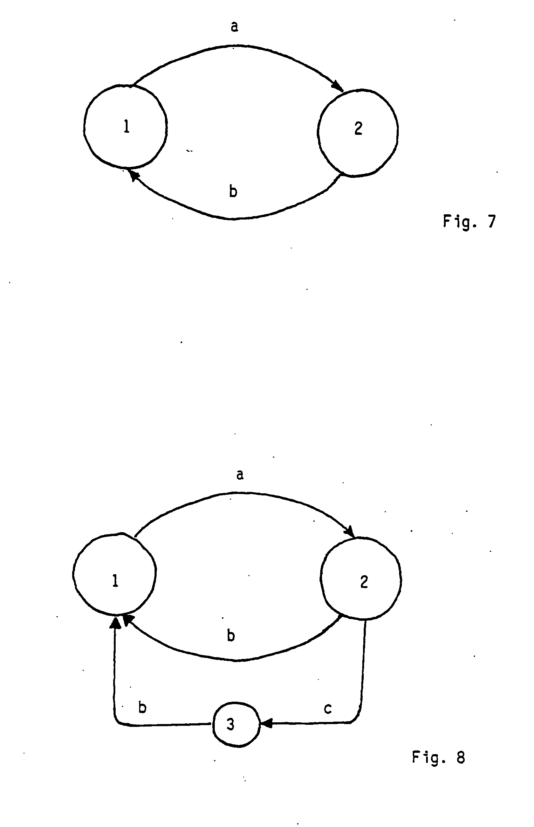

Gemäß einem ersten Weg werden zum Zusammenfassen der Ähnlichkeitsmatrix zu einer Äquivalenzmatrix alle Ähnlichkeiten über einer bestimmten Schwelle gesucht und die entsprechenden Zeitpunkte zu Zuständen eines endlichen Automaten zusammengefaßt, bis alle solche Ähnlichkeiten zwischen Zeitpunkten desselben Zustands bestehen. Beispielsweise lassen sich bei einer unteren Schwelle von 1 die Zustände 1, 3 und 5 zusammenfassen zu einem Zustand 1 und im Gegenzug können auch die Zustände 2 und 4 zu einem neuen Zustand 2 zusammengefaßt werden. Dann werden die PDUs der Beispielkommunikation als Zustandsübergänge des erlernten Automaten eingetragen, und zwar jeweils als Übergang von demjenigen Zustand, in dessen Äquivalenzklasse der Zeitpunkt unmittelbar vor der betreffenden PDU liegt, zu demjenigen Zeitpunkt, in dessen Äquivalenzklasse der Zeitpunkt unmittelbar nach der betreffenden PDU liegt, markiert mit dem betreffenden PDU-Typ. Der Zustandsgraph des zugehörigen endlichen Automaten und damit des zugehörigen Protokolls ist in Fig. 7 dargestellt.

Gemäß einer anderen Methode wird die Ähnlichkeitsmatrix solange mit sich selbst multipliziert, bis ein Endzustand, die sogenannte Äquivalenzmatrix, erhalten wird, aus der sich dann Äquivalenzklassen ableiten lassen. Die Matrixmultiplikation wird jedoch dahingehend verändert, daß Additionen durch die Bildung des Maximums, Multiplikationen durch die Bildung des Minimums der beiden Eingangsgrößen ersetzt werden. Gemäß diesem Weg sind in der Ähnlichkeitsmatrix von Fig. 6 die Einträge in der ersten Reihe, fünfte Spalte und fünfte Reihe, erste Spalte, wie mit Pfeilen angedeutet durch eine 3 zu ersetzen.

Gemäß einem dritten Weg wird eine Äquivalenzrelation zur Bildung der Äquivalenzklasse berechnet, indem die transitive Hülle einer Ähnlichkeitsrelation zwischen den Zeitpunkten innerhalb der Beispielkommunikation gebildet wird.

Zur Ermittlung von Äquivalenzklassen kann jedoch auch so vorgegangen werden, daß Äquivalenzmatrizen für verschiedene Schwellen ermittelt werden und dann die Schwelle verwendet wird, bei der die Anzahl der Zustände unter einem vorgegebenen Wert liegt.

Werden alle 14 Zeitpunkte der Beispielkommunikation von Fig. 5 ausgewertet, ergibt sich der in Fig. 8 dargestellte Regelbaum, d.h. der in Fig. 8 dargestellte endliche Automat.

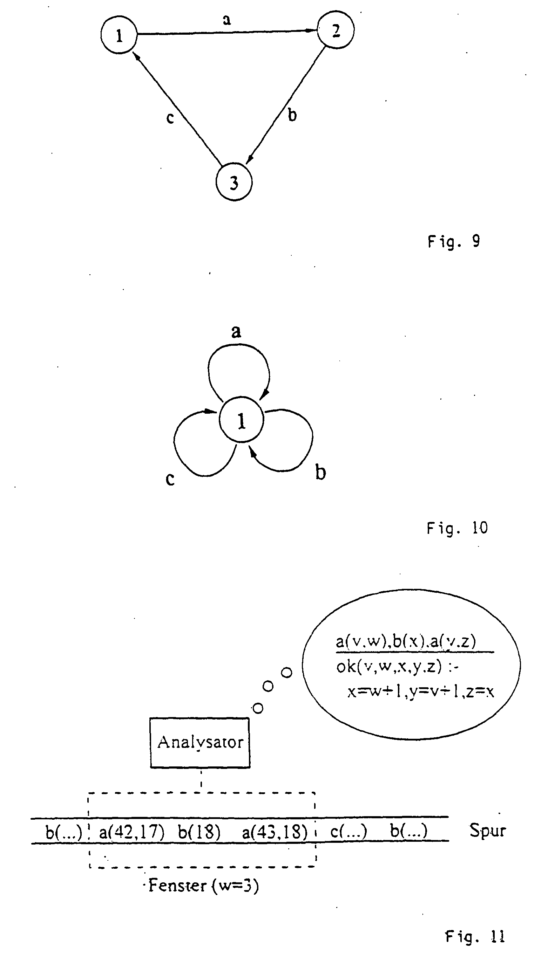

Die Figuren 9 und 10 zeigen die beiden sich in Abhängigkeit der Wahl der Schwelle ergebenden Extrema für den endlichen Automaten. Fig. 9 den minimalen Automaten bei maximal hoher Schwellenwahl, Fig. 10 den maximalen Automaten bei minimal kleiner Schwellenwahl. Um insbesondere den Rechenaufwand niedrig zu halten, können die jeweiligen Verfahrensschritte mehrfach für überlappende Teilbereiche der Beispielkommunikation durchgeführt werden, wobei die Ähnlichkeitsrelationen jeweils zweier überlappender Teilbereiche zu einer gemeinsamen Äquivalenzrelation vereinigt werden. Ein bevorzugter Überlappungsbereich ist eine Überlappung von 30% - 50%.

Erfindungsgemäß gilt es nun die Kontextregeln zu den Nachrichtenattributen zu erlernen. Unabhängig vom dargestellten Ausführungsbeispiel ist die Erfindung auch - ohne vorhergehenden ersten Schritt, siehe oben - auf die Abfolge von Nachrichtentypen anwendbar, wenn die zugehörigen Nachrichtenattribute erlernt werden sollen.

Wie in Fig. 11 dargestellt, ist als Ausgangspunkt die Symbolfolge, d.h. die Abfolge der Nachrichtentypen, aufgrund des vorher ermittelten endlichen Automaten bekannt. Über die Beispielkommunikation wird nun ein Fenster gelegt, vorzugsweise in der Breite w = 3 bis 5. Hierbei ist zu bedenken, daß zur Erkennung von Zusammenhängen über entfernte PDUs größere Fenster zu wählen sind, jedoch mit der Zunahme der Größe eines Fensters die Anzahl der ableitbaren Merkmale sinkt. Für die nachfolgende Betrachtung seien die Nachrichtenattribute der ersten PDU vom Typ a v und w, vom PDU-Typ b x und vom zweiten PDU-Typ a y und z, vgl. Fig. 11.

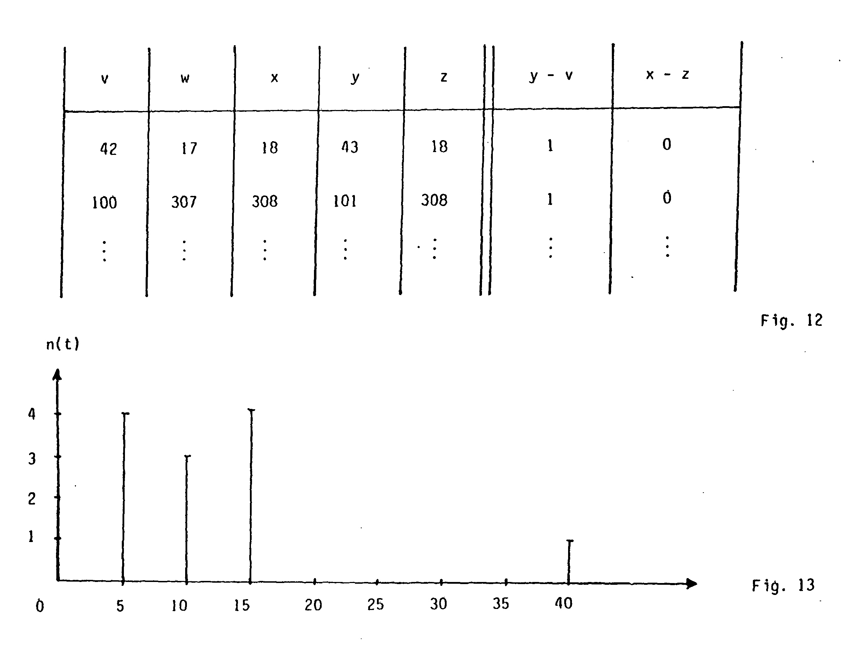

Die linke Hälfte von Fig. 12 zeigt eine Zusammenstellung der Nachrichtenattribute v w x y z beispielhaft zum einen für das in Fig. 11 dargestellte Fenster (Zeile 1), zum anderen für ein anderes Fenster (Zeile 2). Die rechte Hälfte der Fig. 12 zeigt aus den Nachrichtenattributen v bis z abgeleitete Merkmale, und zwar y - v und x - z. Die abgeleiteten Merkmale werden vorzugsweise anhand von Korrelations- und Regressionskoeffizienten auf der Beispielkommunikation für jedes mögliche Merkmalspaar gebildet, wobei der Wert eines abgeleiteten Merkmals berechnet werden kann als Summe, Produkt, Quotient oder Differenz zweier schon vorhandener Merkmale oder als Produkt aus einem vorhandenen Merkmal und einer Konstanten. Unter den Begriff "vorhandene Merkmale" fallen auch in einem vorhergehenden Arbeitsschritt abgeleitete Merkmale. Die zu untersuchenden Korrelationen werden hierbei in vorteilhafter Weise aus gängigen Protokollen abgeleitet.

Anhand der abgeleiteten Merkmale läßt sich dann, wie in Fig. 11 rechts oben angegeben, ein sogenannte ok-Kriterium formulieren, d.h. die Abfolge von fünf Nachrichtenattributen v, w, x, y, z ist ok, d.h. in Ordnung, wenn die nachfolgend aufgeführten Regeln erfüllt sind. Demnach ergibt sich als ok-Kriterium für die in Fig. 11 dargestellte Beispielkommunikation a(v,w) b(x) a (y,z):

```
ok (v, w, x, y, z): -


x = w + 1, y = v + 1, z = x
```

Zusätzlich zu der im Beispiel dargestellten konjunktiven Verknüpfung kommen auch disjunktive Verknüpfungen in Betracht. Dies bedeutet, daß mehrere Unterklassen der Trainingsmenge dadurch konstruiert werden können, daß die logischen Bedingungen in einer Disjunktion von Klauseln organisiert werden, wobei eine Klausel eine Konjunktion einer oder mehrerer logischer Bedingungen darstellt und jeweils eine Unterklasse der Trainingsmenge beschreibt.

Zur Formulierung der Bedingungen können auch auffällige Häufungen der Werte eines in der Trainingsmenge vorhandenen oder abgeleiteten Merkmals bei einem Zahlenwert oder innerhalb eines Zahlenintervalls berücksichtigt werden. Fig. 13 zeigt die Häufung von Zahlenwerten betreffend ein Nachrichtenattribut t. Wie man erkennt, hat eine Beispielkommunikation t viermal den Wert 5, dreimal den Wert 10, viermal den Wert 15 und einmal den Wert 40 angenommen. Hieraus läßt sich auf eine Häufung im Intervall zwischen 5 und 15 schließen. Eine auffällige Häufung kann insbesondere dadurch definiert sein, daß sie den Quotienten maximiert zwischen der Breite der kleineren der beiden unmittelbar an das Zahlenintervall angrenzenden Lücken, in denen keine Werte des betreffenden Merkmals auftreten und der Breite der größten Lücke innerhalb des Zahlenintervalls, in der keine Werte des betreffenden Zahlenintervalls auftreten.

Zur Charakterisierung der gesamten Trainingsmenge kann eine Auswahl der konstruierten Klauseln so durchgeführt werden, daß möglichst alle Elemente der Trainingsmenge durch mindestens eine der Klauseln ausgewählt werden und möglichst viele durch genau eine Klausel.

## EP 1 447 957 B1

**Patentansprüche**

1.  Verfahren zum maschinellen Erlernen arithmetischer Klassifikationsregeln für Merkmalsvektoren aus einer Trainingsmenge mit positiven Beispielen,
    **gekennzeichnet durch** folgende Schritte:

    a) Bilden anhand statistischer Maße von aus vorhandenen Attributen abgeleiteten Attributen ("y-v"; "x-z") in Form arithmetischer Terme;
    b) Formulieren logischer Bedingungen ("xw+1", "y=v+1", "z=x") auf den Zahlenwerten der Attribute aus der Trainingsmenge und der abgeleiteten Attribute;

    wobei die Trainingsmenge eine aus Protokolldateneinheiten PDU zusammengesetzte Beispielkommunikation einer Protokollmaschine ist und PDUs aus PDU-Typen einerseits und PDU-Attributen andererseits aufgebaut sind, ein Merkmalsvektor gebildet wird aus einer Zusammensetzung von PDU-Attributen ("v", "w", "x", "y", "z") von einer bestimmten Anzahl ("Fenster (w=3)") von PDUs, wobei jede Komponente ("v", "w", "x", "y", "z") eines Merkmalsvektors ("(v,w,x,y,z)") als Ausprägung eines Attributs aufgefasst wird, und die logischen Bedingungen die Regeln für die numerischen Attributwerte einer Sequenz von PDUs sind.

2.  Verfahren nach Anspruch 1,
    **dadurch gekennzeichnet,**
    **dass** die Sequenz von PDUs einem spezifischen Teilpfad in einem bekannten endlichen Automaten von Protokoll-Grundzuständen und PDU-Typen entspricht.

3.  Verfahren nach Anspruch 1 oder 2,
    **dadurch gekennzeichnet,**
    **dass** die abgeleiteten Attribute anhand von Korrelations- und Regressionskoeffizienten auf der Trainingsmenge für jedes mögliche Attributpaar gebildet werden, wobei der Wert eines abgeleiteten Attributs für jeden Merkmalsvektor aus schon vorhandenen Attributwerten dieses Vektors berechnet wird, und zwar als Summe, Produkt, Quotient oder Differenz zweier schon vorhandener Attribute oder als Produkt aus einem vorhandenen Attribut und einer Konstanten.

4.  Verfahren nach Anspruch 3,
    **dadurch gekennzeichnet,**
    **dass** bei der Berechnung eines abgeleiteten Attributs aus zwei vorhandenen Attributen die in die Berechnung eingehenden Attribute nach maximaler Korrelation zu einem dritten Attribut und die arithmetische Verknüpfung nach maximaler Korrelation des abgeleiteten Attributs zu demselben dritten Attribut ausgewählt werden, und dass bei der Berechnung eines abgeleiteten Attributs als Produkt eines vorhandenen Attributs mit einer Konstanten als diese Konstante der lineare Regressionskoeffizient des vorhandenen Attributs mit einem zweiten Attribut verwendet wird.

5.  Verfahren nach einem der Ansprüche 1 bis 4,
    **dadurch gekennzeichnet,**
    **dass** zur Formulierung der Bedingungen auffällige Häufungen der Werte eines in der Trainingsmenge vorhandenen oder abgeleiteten Attributs bei einem Zahlenwert oder innerhalb eines Zahlenintervalls berücksichtigt werden.

6.  Verfahren nach Anspruch 5,
    **dadurch gekennzeichnet,**
    **dass** eine auffällige Häufung innerhalb eines Zahlenintervalls **dadurch** definiert ist, dass das Zahlenintervall von allen möglichen Zahlenintervallen dasjenige Zahlenintervall ist, bei dem der Quotient zwischen der Breite der kleineren der beiden unmittelbar an das Zahlenintervall angrenzenden Lücken, in denen keine Werte des betreffenden Attributs auftreten, und der Breite der größten Lücke innerhalb des Zahlenintervalls, in der keine Werte des betreffenden Attributs auftreten, maximal ist.

7.  Verfahren nach einem der Ansprüche 1 bis 6,
    **gekennzeichnet durch** folgenden Schritt:

    Konstruktion mehrerer Unterklassen der Trainingsmenge **durch** Organisation der logischen Bedingungen in einer Disjunktion von Klauseln, wobei eine Klausel eine Konjunktion einer oder mehrerer logischer Bedingungen darstellt und jeweils eine Unterklasse der Trainingsmenge beschreibt.

6

8. Verfahren nach Anspruch 5 oder 6,
**gekennzeichnet durch** folgenden Schritt:

Bildung von Klauseln anhand auffälliger Häufungen, wobei die Klauseln jeweils eine logische Bedingung zur Auswahl derjenigen Beispiele aus der Trainingsmenge formulieren, deren Attributwerte eines bestimmten Attributs innerhalb eines nach der Charakteristik der zugehörigen auffälligen Häufung bestimmten Zahlenintervalls liegen,
wobei jede Klausel eine Konjunktion mehrerer solcher Auswahlbedingungen für verschiedene Attribute darstellen kann.

9. Verfahren nach Anspruch 7 oder 8,
**gekennzeichnet durch** folgenden Schritt:

Durchführung einer Auswahl der konstruierten Klauseln zur Charakterisierung der gesamten Trainingsmenge, so dass möglichst alle Elemente der Trainingsmenge **durch** mindestens eine der Klauseln ausgewählt werden und möglichst viele **durch** genau eine Klausel.

**Claims**

1. Method for machine learning of arithmetic classification rules for feature vectors from a training set with positive examples,
**characterized by** the following steps:

a) forming attributes ("y-v"; "x-z") derived from present attributes based on statistical measures in the form of arithmetic terms;
b) formulating logical conditions ("x=w+1", "y=v+1", "z=x") on the numerical values of the attributes from the training set and the derived attributes;

wherein the training set is an example communication of a protocol machine composed of protocol data units PDU and PDUs are constructed of PDU types on the one hand and PDU attributes on the other hand,
a feature vector is formed from a composition of PDU attributes ("v", "w", "x", "y", "z") of a certain number ("window (w=3)") of PDUs, wherein each component ("v", "w", "x", "y", "z") of a feature vector ("(v,w,x,y,z)") is construed as a characteristic of an attribute, and
the logical conditions are the rules for the numerical attribute values of a sequence of PDUs.

2. Method according to claim 1,
**characterized in that**
the sequence of PDUs corresponds to a specific partial path in a known finite state machine of protocol basic states and PDU types.

3. Method according to claim 1 or 2,
**characterized in that**
the derived attributes are formed based on correlation and regression coefficients on the training set for each possible attribute pair, wherein the value of a derived attribute for each feature vector is calculated from already present attribute values of this vector as a sum, product, quotient or difference of two already present attributes or as a product of a present attribute and a constant.

4. Method according to claim 3,
**characterized in that**
in calculating a derived attribute from two present attributes, the attributes included in the calculation are selected according to maximum correlation to a third attribute and the arithmetic combination is selected according to maximum correlation of the derived attribute to the same third attribute, and that in calculating a derived attribute as a product of a present attribute with a constant, the linear regression coefficient of the present attribute with a second attribute is used as this constant.

5. Method according to any one of claims 1 to 4,
**characterized in that**

for formulating the conditions, conspicuous accumulations of the values of an attribute present in the training set or a derived attribute at a numerical value or within a numerical interval are taken into account.

6. Method according to claim 5,
**characterized in that**
a conspicuous accumulation within a numerical interval is defined **in that** the numerical interval is that numerical interval of all of the possible numerical intervals, in which the quotient between the width of the smaller one of the two gaps immediately adjoining to the numerical interval, in which values of the respective attribute do not occur, and the width of the greatest gap within the numerical interval, in which values of the respective attribute do not occur, is maximum.

7. Method according to any one of claims 1 to 6,
**characterized by** the following step:

construction of several sub-classes of the training set by organization of the logical conditions in a disjunction of clauses, wherein a clause represents a conjunction of one or more logical conditions and each describes a sub-class of the training set.

8. Method according to claim 5 or 6,
**characterized by** the following step:

forming clauses based on conspicuous accumulations, wherein the clauses each formulate a logical condition for selection of those examples from the training set, whose attribute values of a certain attribute are within a numerical interval determined according to the characteristic of the associated conspicuous accumulation, wherein each clause can represent a conjunction of several such selection conditions for different attributes.

9. Method according to claim 7 or 8,
**characterized by** the following step:

performing a selection of the constructed clauses for characterization of the entire training set such that if possible all of the members of the training set are selected by at least one of the clauses and as many as possible by exactly one clause.

**Revendications**

1. Procédé d'apprentissage mécanique de règles de classification arithmétiques pour des vecteurs caractéristiques provenant d'une masse d'entraînement avec des exemples positifs,
**caractérisé par** les étapes suivantes consistant à :

a) former, à l'aide de valeurs statistiques des attributs (« y-v » ; « x-z »), déduits d'attributs existants, sous forme de termes arithmétiques ;
b) formuler des conditions logiques (« x=w+1 », « y=v+1 », « z=x ») sur les valeurs numériques des attributs provenant de la masse d'entraînement et des attributs déduits ;

moyennant quoi la masse d'entraînement est une communication exemple, composée à partir d'unités de données journal PDU, d'une machine journal et les PDU sont constitués de types de PDU d'une part et d'attributs de PDU d'autre part,
un vecteur caractéristique est formé à partir d'une combinaison d'attributs PDU (« v », « w », « x », « y », « z ») d'un nombre défini (« fenêtre (w=3) ») de PDU,
moyennant quoi chaque composant (« v », « w », « x », « y », « z ») d'un vecteur caractéristique (« (v, w, x, y, z) ») est détecté comme marque d'un attribut et
les conditions logiques représentent les règles des valeurs numériques d'attribut d'une séquence de PDU.

2. Procédé suivant la revendication 1,
**caractérisé en ce**
**que** la séquence de PDU correspond à un chemin partiel spécifique dans un automate fini connu d'états journaux initiaux et de types de PDU.

**3.** Procédé suivant la revendication 1 ou 2,
**caractérisé en ce**
**que** les attributs déduits sont formés à l'aide de coefficients de corrélation et de régression sur la masse d'entraînement pour chaque paire éventuelle d'attributs, moyennant quoi la valeur d'un attribut déduit est calculée pour chaque vecteur caractéristique à partir de valeurs déjà existantes d'attributs de ce vecteur et ce en tant que somme, produit, quotient ou différence de deux attributs déjà existants ou en tant que produit d'un attribut existant et d'une constante.

**4.** Procédé suivant la revendication 3,
**caractérisé en ce**
**que**, lors du calcul d'un attribut déduit à partir de deux attributs existants, les attributs, entrant dans le calcul, sont sélectionnés après une corrélation maximale par rapport à un troisième attribut et l'interconnexion arithmétique après une corrélation maximale de l'attribut déduit par rapport au troisième et même attribut et que, lors du calcul d'un attribut déduit en tant que produit d'un attribut existant avec une constante au titre de cette constante, le coefficient de régression linéaire de l'attribut existant est utilisé avec un deuxième attribut.

**5.** Procédé suivant l'une des revendications 1 à 4,
**caractérisé en ce**
**qu'**en vue de la formulation des conditions, les cumuls ostensibles des valeurs d'un attribut, existant ou déduit, dans la masse d'entraînement seront pris en compte dans le cas d'une valeur numérique ou dans un intervalle numérique.

**6.** Procédé suivant la revendication 5,
**caractérisé en ce**
**qu'**un cumul ostensible dans un intervalle numérique est défini dans le sens que l'intervalle numérique est, parmi tous les intervalles numériques possibles, celui pour lequel le quotient est maximum, entre la largeur de l'interstice plus petit parmi les deux interstices immédiatement voisins de l'intervalle numérique, interstices dans lesquels aucune valeur de l'attribut concerné n'intervient et la largeur de l'interstice le plus grand dans l'intervalle numérique, interstice dans lequel aucune valeur de l'attribut concerné n'intervient.

**7.** Procédé suivant l'une des revendications 1 à 6,
**caractérisé par** l'étape suivante consistant à :

élaborer plusieurs sous-catégories de la masse d'entraînement par le biais de l'organisation des conditions logiques dans une disjonction de clauses, moyennant quoi une clause représente une conjonction d'une ou de plusieurs conditions logiques et décrit respectivement une sous-catégorie de la masse d'entraînement.

**8.** Procédé suivant la revendication 5 ou 6,
**caractérisé par** l'étape suivante consistant à :

former des clauses à l'aide de cumuls ostensibles,
moyennant quoi les clauses formulent respectivement une condition logique, destinée à sélectionner les exemples provenant d'une masse d'entraînement, dont les valeurs d'attribut d'un attribut défini sont comprises dans un intervalle numérique, défini suivant la caractéristique du cumul ostensible associé, moyennant quoi chaque clause peut représenter une conjonction de plusieurs conditions de sélection de ce type pour des attributs différents.

**9.** Procédé suivant la revendication 7 ou 8,
**caractérisé par** l'étape suivante consistant à :

exécuter une sélection des clauses élaborées pour caractériser l'ensemble de la masse d'entraînement, de sorte que si possible tous les éléments de la masse d'entraînement sont sélectionnés par le biais d'au moins l'une des clauses et si possible de nombreux éléments le sont précisément par le biais d'une clause.

Fig. 1

Fig. 2

Fig. 3

a (x,y)

| Byte | | |
|---|---|---|
| 1 - 2 | 42 (ACK) | a |
| 3 - 6 | Tel. Nr. Empfänger | x |
| 7 - 10 | Tel. Nr. Sender | y |

Fig. 4

a b a b a c b a c b a b a b a
1 2 3 4 5 6 7 8 9 10 11 12 13 14

Fig. 5

|   | 1 | 2 | 3 | 4 | 5 |
|---|---|---|---|---|---|
| 1 | ∞ | 0 | 3 | 0 | ① ← ③ |
| 2 | 0 | ∞ | 0 | 3 | 0 |
| 3 | 3 | 0 | ∞ | 0 | 3 |
| 4 | 0 | 3 | 0 | ∞ | 0 |
| 5 | ① | 0 | 3 | 0 | ∞ |

③

Fig. 6

Fig. 7

Fig. 8

Fig. 9

Fig. 10

$$\frac{a(v,w),b(x),a(y,z)}{ok(v,w,x,y,z) :-}$$
$$x=w+1,y=v+1,z=x$$

Analysator

b(...) a(42,17) b(18) a(43,18) c(...) b(...)  Spur

·Fenster (w=3)

Fig. 11

| v | w | x | y | z | y - v | x - z |
|---|---|---|---|---|---|---|
| 42 | 17 | 18 | 43 | 18 | 1 | 0 |
| 100 | 307 | 308 | 101 | 308 | 1 | 0 |
| ⋮ | ⋮ | ⋮ | ⋮ | ⋮ | ⋮ | ⋮ |

Fig. 12

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9811702 A1

**In der Beschreibung aufgeführte Nicht-Patentliteratur**

- ISO. Information Processing Systems - Open Systems Interconnection - Basis Reference Model. *International Standard ISO/IS 7498, ISO,* 1984
- Proceedings of the 1994 International Symposium on Software Testing and Analysis. *(ISSTA), ACM SIGSOFT Software Engineering Notes, Special issue,* August 1994, 109-124
- *Useful Equations for Linear Regression,* 26. Januar 1999, 1-3, http://hesweb1.med.virginia.edu/biostat/teaching/biostat.mod/ for mulas.pdf